# EUROPÄISCHE PATENTSCHRIFT

(11) **EP 2 389 343 B1**
(45) Veröffentlichungstag und Bekanntmachung des Hinweises auf die Patenterteilung: **12.03.2014**
(21) Anmeldenummer: 10704338.2
(22) Anmeldetag: 22.01.2010
(51) Int. Cl.: C02F 1/14, C02F 1/18, F24J 2/00, B01D 5/00, B01D 1/00, B01D 1/22, C02F 103/08

(54) **SOLARTHERMISCHE VORRICHTUNG ZUR HERSTELLUNG VON FRISCHWASSER**
SOLAR THERMAL DEVICE FOR PRODUCING FRESH WATER
DISPOSITIF THERMO-SOLAIRE DESTINÉ À LA PRODUCTION D'EAU DOUCE

(30) Priorität: 26.01.2009 AT 1292009
(43) Veröffentlichungstag der Anmeldung: 30.11.2011
(73) Patentinhaber: 4Elements Invent Ltd, Swatar, Birkirkara BKR 4013 (MT)
(72) Erfinder: KERSCHGENS, Daniel, E-03730 Javea (ES); SUSTR, Norbert, A-1180 Wien (AT); WALDSTEIN-WARTENBERG, Karl Albrecht, A-1040 Wien (AT); GABLER-FRITZ, Franz, A-1090 Wien (AT)
(74) Vertreter: Weinzinger, Philipp
(86) Internationale Anmeldenummer: PCT/EP2010/050718
(87) Internationale Veröffentlichungsnummer: WO 2010/084168

(56) Entgegenhaltungen:
- EP-A1- 1 598 314
- EP-A2- 0 345 236
- WO-A1-03/008338
- CA-A1- 2 129 600
- JP-A- 62 136 287
- US-A- 3 397 117
- US-A- 4 210 121
- US-A- 4 312 709
- US-A- 4 469 938
- US-A- 4 504 362
- US-A- 4 680 090
- US-A1- 2008 073 198

## Beschreibung

Die Erfindung betrifft eine portable, solarthermische Vorrichtung zur Herstellung von Frischwasser aus Abwässern oder Salzwasser.

Derartige Vorrichtungen werden benötigt, um verschmutztes Wasser zu reinigen, beispielsweise um aus Abwasser Trinkwasser herzustellen, aber auch zur Herstellung von Süßwasser aus Salzwasser. Eine transportable Destilliereinrichtung ist beispielsweise aus der DE 198 15 541 C1 bekannt, bei welcher zwischen einer kuppelförmigen Oberfolie und einem Aufnahmebereich für das Meerwasser eine rohrförmige Druckkammer ausgebildet ist, die einteilig mit der Oberfolie ausgebildet ist, den Vorratsbereich für das Meerwasser vom Verdunstungsbereich räumlich abtrennt und die gesamt Vorrichtung mechanisch stabilisiert. Die Verdunstungs- und Kondensationskammer, durch deren transparente Oberfolie das Sonnenlicht eindringt, ist mit einem Überdruck beaufschlagt. Beim Betrieb der Destillationsvorrichtung wird das im Vorratsbereich befindliche Wasser durch die Wärmeeinwirkung von außen verdunstet. Der dadurch entstehende Wasserdampf steigt auf und kondensiert an der Oberfolie, wobei das Kondensat nach links und rechts unten abfließt, und in einem Kondensationsbereich gesammelt wird, der zwischen Oberfolie und den rohrförmigen Kammern ausgebildet ist. Aus diesen Bereichen kann das Süßwasser über einen Ablauf entnommen werden.

Aus der GB 832 123 ist in diesem Zusammenhang ein schwimmfähiger Destillierapparat bekannt, der eine transparente Außenhülle aufweist, die mit einem Netzwerk von aufblasbaren Stützrohren entfaltet wird. Das sich bildende Destillat wird in einer ringförmigen Kammer im Fußbereich des Apparates aufgefangen und kann an einem Schlauch entnommen werden.

Weiters ist aus der EP 1 448 481 B1 eine Vorrichtung zur Trinkwassergewinnung bekannt, welche sowohl an Land als auch auf dem Meer einsetzbar ist. Die Vorrichtung besteht aus einem haubenförmigen, selbsttragenden Formteil aus einem transparenten Kunststoff, der in seinem unteren Bereich eine offene Bodenfläche mit einer randseitigen Auffangrinne für das Kondensat besitzt. Für die Entnahme des Kondensates befindet sich an der Oberseite eine Öffnung, wobei die Vorrichtung zum Entleeren auf den Kopf gestellt werden muss.

Weitere solarthermische Vorrichtungen zur Herstellung von Frischwasser sind aus US 4 504 362, US 3 875 926 und US 4210494 bekannt.

Aufgabe der Erfindung ist es, eine portable, solarthermische Vorrichtung zur Herstellung von Frischwasser aus Abwässern oder Salzwasser der eingangs genannten Art derart zu verbessern, dass diese einfach herstellbar und im Bedarfsfall rasch einsatzbereit ist. Weiters soll die Vorrichtung möglichst platzsparend gelagert werden können.

Diese Aufgabe wird durch eine Vorrichtung gelöst, die folgende Merkmale aufweist:
- einen geschlossenen Fluidkreislauf aus miteinander verbundenen Rohr- oder Schlauchelementen mit einem Abwasserzulauf und einem Frischwasserablauf,
- wobei der Fluidkreislauf einen geneigten, im Wesentlichen normal zur Sonneneinstrahlung ausgerichteten Heizabschnitt zur Erwärmung und Verdunstung des Abwassers, daran anschließend
- einen im Wesentlichen senkrecht ausgerichteten Kondensierabschnitt zur Kondensation des Frischwassers und Erwärmung des Abwassers, und
- einen als Fußteil ausgebildeten Speicherabschnitt für das kondensierte Frischwasser aufweist.

Der geschlossene Fluidkreislauf aus den miteinander verbundenen Rohr- bzw. Schlauchelementen weist im Unterschied zu den Vorrichtungen gemäß Stand der Technik eine platzsparende flache Struktur (Triangel bzw. Trapez) auf, in deren geneigten Heizabschnitt bevorzugt ein Solarkollektor zur Konzentration der thermischen Energie der Sonnenstrahlung auf eine Verdunstungsfläche im Inneren des Heizabschnittes vorgesehen ist, wobei der Kollektor beweglich am Heizabschnitt befestigt ist.

Gemäß einer ersten, vorteilhaften Ausführungsvariante besteht der Solarkollektor aus einer aufblasbaren Folienstruktur, die eine parabel- oder kreiszylindrische Spiegelfolie und eine transparente Eintrittsfolie für die Sonnenstrahlung aufweist, die gemeinsam mit zwei Seitenteilen einen Hohlraum aufspannen, den der Heizabschnitt des Fluidkreislaufs im Fokusbereich der Spiegelfolie durchsetzt.

Aus der US 4,051,834 sind zwar Solarkollektorsysteme bekannt geworden, bei welchen der Kollektor aus einem für Sonnenstrahlung transparenten, oberen Bereich und aus einem reflektierenden Basisbereich besteht, diese dienen jedoch nur zur Erwärmung eines Wärmeträgermediums. Der reflektierende Basisbereich besteht aus einer MYLAR-Folie, welche mit Aluminium beschichtet ist und die Sonnenstrahlung auf ein von einem Wärmeträgermedium durchflossenes Heizrohr bündelt. Es sind sowohl Ausführungsvarianten beschrieben, bei welchen das Heizrohr im Inneren des Kollektors verläuft, als auch Ausführungsvarianten, bei welchen das Heizrohr als äußere Stützstruktur verwendet wird, auf welche der Kollektor mit Distanzelementen beweglich aufgehängt ist. Durch die waagrechte Anordnung des Heizrohres erfolgt keine tägliche Sonnennachführung, sondern lediglich eine händisch auszuführende, jahreszeitliche Anpassung an unterschiedliche Sonnenstellungen, welche mit einer Verankerungskette bewerkstelligt wird. Die beschriebene Vorrichtung ist allerdings nicht geeignet, Frischwasser aus Abwässern oder Salzwasser zu destillieren.

Weiters ist aus der EP 0 030 193 B1 ein Röhrenkollektor bekannt, der im Inneren einer aufblasbaren Struktur angeordnet ist. Die aufblasbare Struktur besteht aus einer oberen transparenten Folie und einer Basisfolie, die an der Innenseite reflektierend beschichtet ist. Die Sonnenstrahlung wird auf ein Heizrohr gelenkt, das von einem Wärmeträgermedium durchflossen wird. Mit einer mechanischen Nachführeinrichtung wird das Heizrohr seitlich verschoben und dem sich mit dem Sonnenstand ändernden Fokusbereich nachgeführt. Auch hier handelt es sich um eine Einrichtung zur Erwärmung des Wärmeträgermediums und nicht um eine Vorrichtung zur Herstellung von Frischwasser.

Gemäß einer zweiten vorteilhaften Ausführungsvariante der Erfindung weist der Solarkollektor zumindest einen Absorberflügel auf, der mit der Verdunstungsfläche des Heizabschnittes des geschlossenen Fluidkreislaufs in thermischem Kontakt steht. Bevorzugt sind zwei Absorberflügel vorgesehen, die parallel zur Achse des Heizabschnittes drehbar oder faltbar ausgeführt sind und aus einer Gebrauchsstellung in eine platzsparende Aufbewahrungsstellung in den durch den Fluidkreislauf aufgespannten Raum eingeklappt werden können.

Die einzelnen Abschnitte des erfindungsgemäßen Fluidkreislaufs weisen innovative Einbauten auf. So ist im Inneren des geneigten, nach oben ansteigenden Heizabschnittes eine Verdunstungsmatte angeordnet, die aus einem flexiblen Folienmaterial besteht, wobei ein Fördermittel, beispielsweise eine mit Solarstrom angetriebene Pumpe, vorgesehen ist, die das Abwasser auf die Verdunstungsmatte fördert.

Erfindungsgemäß ist im Inneren des an den Heizabschnitt anschließenden Kondensierabschnittes eine vorzugsweise einen Zylindermantel bildende Wärmetauschermatte aus einem flexiblen Folienmaterial angeordnet, deren oberer Rand mit dem Abwasserzulauf und deren unterer Rand mit einer durch den Speicherabschnitt des Fluidkreislaufs geführten Schlauchleitung verbunden ist, die das Abwasser über ein Fördermittel, vorzugsweise eine mit Solarstrom betriebene Pumpe, in den Heizabschnitt führt. Durch die Anordnung der Wärmetauschermatte beim Abwasserzulauf wird durch das kühlere Abwasser die Kondensation des Frischwassers unterstützt und gleichzeitig das Abwasser erwärmt, wodurch der Wirkungsgrad der Anlage erhöht wird.

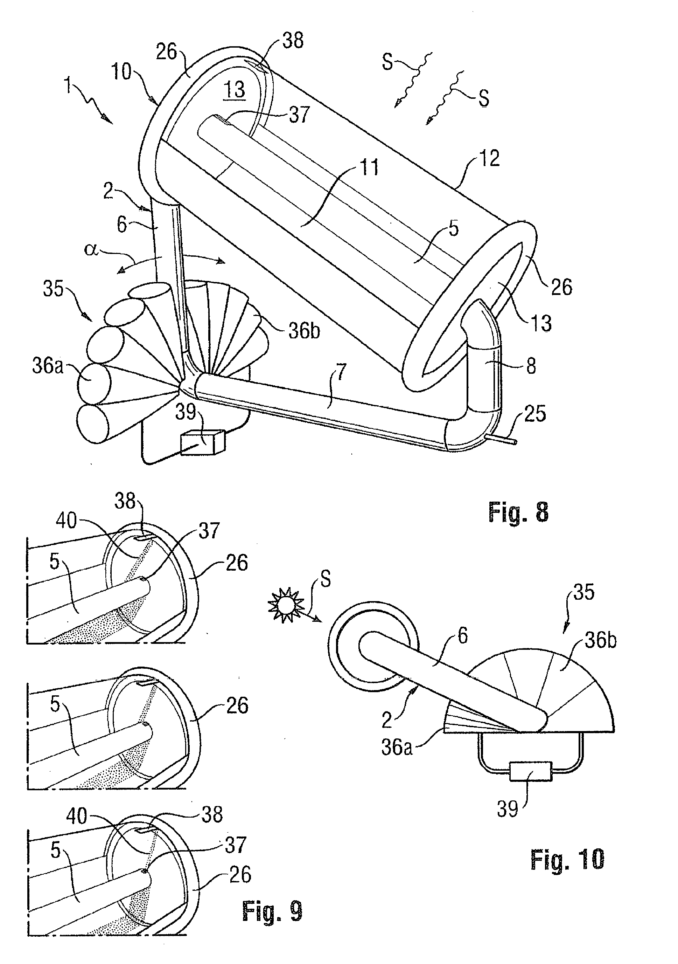

Gemäß einer besonders vorteilhaften Ausführungsvariante weist die erfindungsgemäße Vorrichtung eine Nachführeinrichtung zum Ausgleich des Sonnenstandes auf, welche am Fluidkreislauf, vorzugsweise an dessen Kondensierabschnitt angreift und eine Kippbewegung der gesamten Vorrichtung auslöst. Diese sehr einfache, aber wirkungsvolle und mit nur wenigen Bauteilen auskommende Nachführeinrichtung weist über eine Pumpe verbundene, aufblasbare bzw. aufpumpbare Formkörper auf, deren jeweiliger Füllgrad den Neigungswinkel der gesamten Vorrichtung festlegt. Die Details und die Funktionsweise dieser innovativen Nachführeinrichtung werden weiter unten in den Fig. 8 bis Fig. 10 näher erläutert.

Gemäß einer weiteren, alternativen Ausführungsvariante der Erfindung weist der Solarkollektor eine Nachführeinrichtung zum Ausgleich des Sonnenstandes auf, welche eine Drehbewegung des Kollektors um die Achse des Heizabschnittes auslöst. Im Unterschied zur oben beschriebenen Nachführeinrichtung ist hier der Kollektor beweglich auf der Achse des Heizabschnittes gelagert, wobei jedoch auch bei dieser Variante einfache, am Markt erhältliche bzw. billig herzustellende Mittel zur Anwendung kommen. So besteht die Nachführeinrichtung im Wesentlichen aus ersten und zweiten Schlauchabschnitten, deren Enden jeweils in entgegengesetzten Richtungen um einen rohrförmigen Abschnitt des Fluidkreislaufs gewunden sind, wobei deren freie Enden am Solarkollektor festgelegt sind. In den Schläuchen befindet sich eine Flüssigkeit, beispielsweise Wasser, welches lediglich von einem Schlauchabschnitt in den anderen gepumpt werden muss, wodurch sich dessen Spannkraft am aufgerollten Ende ändert und eine Drehbewegung des Solarkollektors auslöst. Wie bei der erstgenannten Nachführeinrichtung mit den entfaltbaren Formkörpern kann auch bei der Nachführeinrichtung mit den Schlauchabschnitten eine Pumpe für eine größere Zahl von Solarkollektoren verwendet werden, so dass der Aufwand für die Sonnennachführung minimiert wird.

Bei jener Ausführungsvariante der Erfindung, deren Solarkollektor Absorberflügel aufweist, ist keine Nachführeinrichtung vorgesehen. Die Absorberflügel sind erfindungsgemäß an einem Basisteil befestigbar, das eine an den Heizabschnitt angepasste Aufnahmefläche aufweist.

Erfindungsgemäß können die Absorberflügel Kanäle für den Transport eines Wärmeträgermediums aufweisen, welche Kanäle in Verbindungsleitungen münden, die durch das Basisteil des Solarkollektors geführt sind. Die Absorberflügel können aus einem mehrlagigen Folienverbunden bestehen, welcher eine aufblasbare Stützmatte mit Luftkanälen und eine Absorbermatte mit Kanälen für ein Wärmeträgermedium bildet.

Die Erfindung wird im Folgenden anhand von Zeichnungen näher erläutert. Es zeigen:
- Fig. 1: eine erfindungsgemäße solarthermische Vorrichtung zur Herstellung von Frischwasser aus Abwässern oder Salzwasser in einer dreidimensionalen Darstellung;
- Fig. 2: eine Ausführungsvariante der erfindungsgemäßen Vorrichtung in einer dreidimensionalen Darstellung,
- Fig. 3: das Funktionsprinzip der erfindungsgemäßen Vorrichtung in einer schematisierten Schnittdarstellung;
- Fig. 4: eine Schnittdarstellung gemäß Linie IV-IV in Fig. 3;
- Fig. 5: eine Schnittdarstellung gemäß Linie V-V in Fig. 3;
- Fig. 6: und Fig. 7 die Details der Einbauten im Fluidkreislauf der erfindungsgemäßen Vorrichtung;
- Fig. 8: eine weitere Ausführungsvariante der erfindungsgemäßen Vorrichtung in einer dreidimensionalen Darstellung;
- Fig. 9: und Fig. 10 Details der Vorrichtung gemäß Fig. 8 in Zusammenhang mit der Sonnennachführung;
- Fig. 11: eine weitere erfindungsgemäße Ausführungsvariante der Vorrichtung in einer dreidimensionalen Darstellung;
- Fig. 12: den Solarkollektor der Ausführungsvariante gemäß Fig. 2 in einer Detaildarstellung;
- Fig. 13: ein Detail des Solarkollektors gemäß Fig. 12;
- Fig. 14: das Funktionsprinzip einer Ausführungsvariante in einer schematisierten Schnittdarstellung; sowie
- Fig. 15: ein Detail der Variante gemäß Fig. 14.

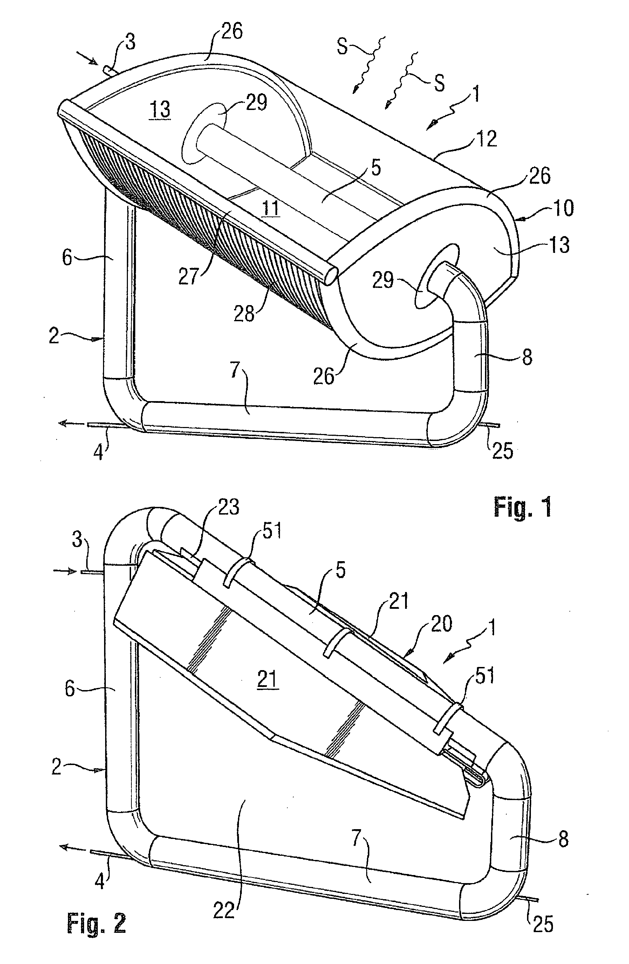

Die erste Ausführungsvariante der portablen, solarthermischen Vorrichtung 1 zur Herstellung von Frischwasser aus Abwässern oder Salzwasser samt Funktionsprinzip wird in den Fig. 1 sowie Fig. 3 bis Fig. 7 dargestellt. Die Vorrichtung 1 besteht aus einem bis auf den Abwasserzulauf 3 und den Frischwasserablauf 4 im Wesentlichen geschlossenen Fluidkreislauf 2 aus miteinander verbundenen Rohrelementen (bevorzugt PVC-Hartkunststoffrohre) oder auch aus Schlauchelementen aus textilverstärktem Folienmaterial, die für den Betrieb der Anlage aufgepumpt werden. Der Fluidkreislauf 2 weist einen geneigten, nach oben ansteigenden, im Wesentlichen normal zur Sonneneinstrahlung S ausgerichteten Heizabschnitt 5 auf, der zur Erwärmung und zur Verdunstung des zugeführten Abwassers bzw. Meerwassers dient.

An den Heizabschnitt schließt ein im Wesentlichen senkrecht ausgerichteter Kondensierabschnitt 6 an, in welchem das im Heizabschnitt 5 verdunstete Wasser kondensiert, wobei die Kondensationswärme an das zugeführte Abwasser abgegeben wird. Weiters weist der Fluidkreislauf 2 einen als Fußteil ausgebildeten Speicherabschnitt 7 für das kondensierte Frischwasser auf, welcher über einen Verbindungsabschnitt 8 mit dem Heizabschnitt 5 verbunden ist. Der Fußteil der Vorrichtung 1 kann hier nicht weiter dargestellte Stützelemente aufweisen, die die solarthermische Vorrichtung am Aufstellungsort abstützen oder es kann eine Aufnahme vorgesehen sein, in welche der untere Teil des Fluidkreislaufs 2 eingesteckt wird.

Der Fluidkreislauf 2 kann einfach aus Standard-PVC-Rohren zusammengesteckt werden, wobei an den Ecken die entsprechenden Kniestücke mit den erforderlichen Winkeln eingesetzt werden. Davon abweichend sind auch alternative Strukturen denkbar, wie Rohre mit ovalem Querschnitt oder mehrere nebeneinander geführte Rohre.

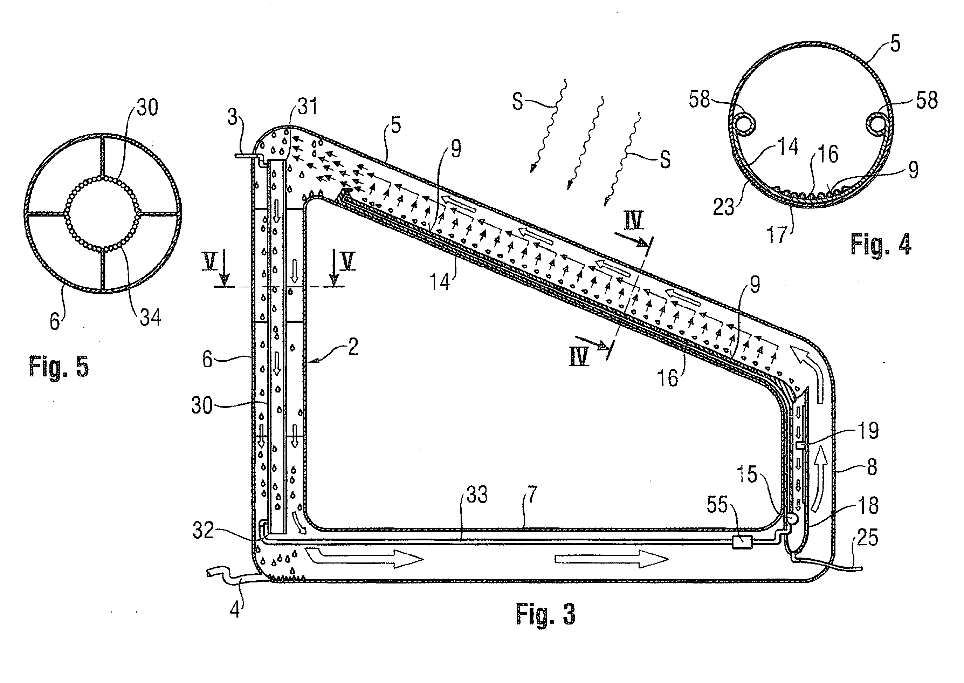

Am Heizabschnitt 5 des Fluidkreislaufs 2 ist ein Solarkollektor 10 drehbeweglich befestigt, welcher zur Konzentration der thermischen Energie der Sonnenstrahlung S auf eine Verdunstungsfläche 9 (siehe z.B. Fig. 3 und Fig. 4) im Inneren des Heizabschnittes 5 dient.

In der Ausführungsvariante gemäß Fig. 1 besteht der Solarkollektor 10 im Wesentlichen aus einer aufblasbaren Folienstruktur, die eine parabelförmig gekrümmte Spiegelfolie 11 und auf der gegenüberliegenden Seite eine transparente Eintrittsfolie 12 für die Sonnenstrahlung S aufweist. Mit den zwei Seitenteilen 13 wird dadurch ein Hohlraum aufgespannt, den der Heizabschnitt 5 des Fluidkreislaufs 2 im Fokusbereich der Spiegelfolie 11 durchsetzt.

Die Seitenteile 13 weisen aufblasbare Rahmenteile 26 aus textilverstärktem Folienmaterial auf, die im aufgeblasenen Zustand die Parabelform der Spiegelfläche 11 aufspannen. Die Parabelform wird weiters dadurch unterstützt, dass die im Inneren angebrachte Spiegelfolie 11 auf einer vorzugsweise mehrlagigen, aufblasbaren Stützfolie 28 aufgebracht ist, deren Zuschnitt derart konzipiert ist, dass sich im aufgeblasenen Zustand eine Parabelform ergibt. Als weitere Stützelemente sind aufblasbare Verbindungselemente 27 aus textilverstärktem Folienmaterial vorgesehen, die die aufblasbaren Rahmenteile 26 der Seitenteile 13 miteinander verbinden. Die inneren Hohlräume der Rahmenteile 26 und der Verbindungselemente 27 sowie auch der aufblasbaren Stützfolie 28 stehen miteinander in Verbindung, so dass die gesamte Struktur mit Hilfe eines Einlassventils aufgepumpt werden kann.

In die Seitenteile 13 des Solarkollektors 10 sind Lagerscheiben 29 beispielsweise aus Hartkunststoff eingearbeitet, mit welchen der gesamte Solarkollektor 10 drehbar am Heizabschnitt 5 des rohrförmigen Fluidkreislaufs 2 gelagert ist. Die gesamte Vorrichtung kann fast ausschließlich aus weicher Kunststofffolie hergestellt werden, lediglich die tragenden Teile bestehen aus textilverstärkter Kunststofffolie oder aus PVC-Kunststoffrohren. Es ist somit eine kleine Verpackungseinheit möglich, wodurch die Vorrichtung gut für einen schnellen, mobilen Einsatz geeignet ist.

Das Funktionsprinzip der Vorrichtung ist ausführlich in den Fig. 3 bis Fig. 5 dargestellt. Das Abwasser gelangt über den Abwasserzulauf 3 in den Kondensierabschnitt 6 des Fluidkreislaufs 2, wobei hier eine zu einem rohrförmigen Zylindermantel aufgerollte Wärmetauschermatte 30 aus einem flexiblen Folienmaterial durchflossen wird, deren oberer Rand 31 mit dem Abwasserzulauf 3 verbunden ist. In diesem Bereich wird das Abwasser durch das kondensierende Frischwasser angewärmt. Der untere Rand 32 der Wärmetauschermatte 30 ist mit einer durch den Speicherabschnitt 7 des Fluidkreislaufs 2 geführten Schlauchleitung 33 verbunden, die das Abwasser in eine Abwassertasche 18 führt, die im Verbindungsabschnitt 8 des Fluidkreislaufs 2 angeordnet ist. Mittels einer Solarpumpe 15 wird das Abwasser aus der Abwassertasche 18 in den Heizabschnitt 5 transportiert.

Im Inneren des Heizabschnittes 5 ist eine Verdunstungsmatte 14 angeordnet (eingehängt oder eingeklebt), die aus einem flexiblen Folienmaterial besteht, deren Oberfläche gemeinsam mit einer aufgeklebten oder aufgeschweißten Aufheiztasche 16 die Verdunstungsfläche 9 bildet (siehe Fig. 4). Die Aufheiztasche 16 wird durch eine aufgeklebte oder aufgeschweißte Folienbahn gebildet, wobei zwischen der Verdunstungsmatte 14 und der Aufheiztasche 16 Förderkanäle 17 für das aus der Abwassertasche 18 hochgepumpte Abwasser ausgebildet sind.

Auch die Abwassertasche 18 kann aus einem flexiblen Folienmaterial bestehen, wobei das aus dem Heizabschnitt 5 rückfließende, nicht verdunstete Abwasser aufgenommen und erneut in den Heizabschnitt 5 gepumpt wird. Die Solarpumpe 15 für das Abwasser ist gemeinsam mit einen Wasserstandsensor 19 in der Abwassertasche 18 angeordnet und kann mit dieser eine austauschbare Einheit bilden. Sobald der Wasserstandsensor 19 ein Abfallen des Wasserstandes in der Abwassertasche 18 detektiert, wird ein Regelventil 55 in der Schlauchleitung 33 geöffnet, wodurch Abwasser automatisch bis zu einer durch den Wasserstandsensor 19 definierten Höhe zufließen kann.

In der erfindungsgemäßen Vorrichtung entstehen somit im geschlossenen Fluidkreislauf 2 ein Wasserkreislauf sowie ein Luftkreislauf, der einerseits durch den nach oben geneigten Heizabschnitt 5 (aufsteigende Heißluft) und andererseits durch den senkrecht abfallenden Kondensierabschnitt 6 (abfallende gekühlte Luft) angetrieben wird und den im Heizabschnitt entstehenden Wasserdampf aktiv in den Kondensierabschnitt fördert.

Das kondensierte Frischwasser bzw. Süßwasser sammelt sich im Speicherabschnitt 7 und kann durch den Frischwasserablauf 4 aus dem System entnommen werden. Durch den fortgesetzten Wasserkreislauf im Heizbereich wird das Abwasser bzw. das Salzwasser aufkonzentriert und muss von Zeit zu Zeit, beispielsweise einmal pro Tag, am Wasserablauf 25 der Abwassertasche 18 entnommen werden. Bevorzugt kann die Abwassertasche 18 durch Falten und/oder Kleben einstückig aus einem Abschnitt der Verdunstungsmatte 14 hergestellt sein, so dass die gesamte Einheit aus Verdunstungsmatte 14, Aufheiztasche 16 und Abwassertasche 18 ausgewechselt werden kann.

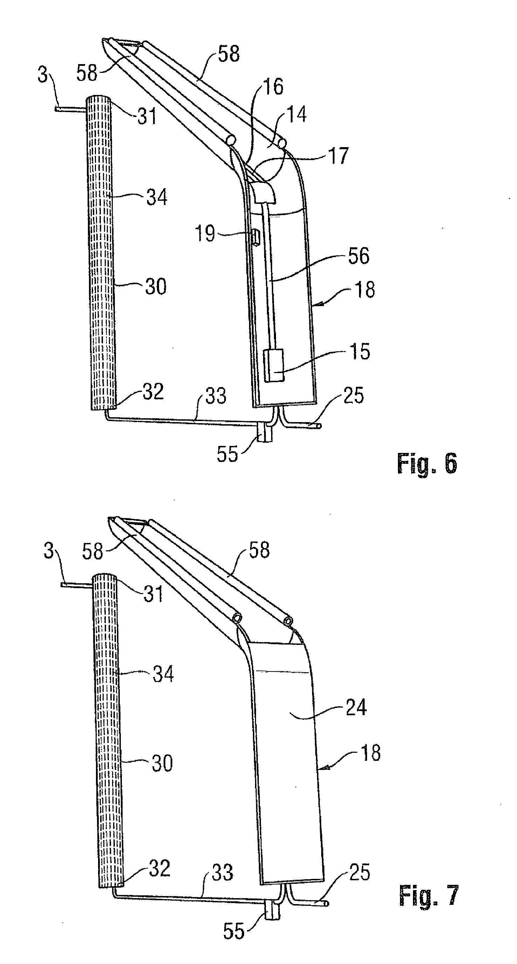

Die erfindungsgemäßen Einbauten des Fluidkreislaufs 2 sind übersichtlich in den Fig. 6 und Fig. 7 dargestellt, wobei zur besseren Ansicht in Fig. 6 die Deckfläche 24 der Abwassertasche 18 entfernt wurde, so dass auch die Einbauten der Abwassertasche 18, wie Fördermittel 15, Verbindungsleitung 56 zu den Förderkanälen 17 sowie der Wasserstandsensor 19, sichtbar werden. Die elektrischen Leitungen zwischen Wasserstandsensor 19 und Regelventil 55 sowie zur Solarpumpe 15 sind nicht dargestellt. Die Solarpumpe 15 weist eine Leistung von ca. 15W bis 25W auf und steht mit einem hier nicht dargestellten Solarpaneel in Verbindung.

An den beiden Seitenrändern der Verdunstungsmatte 14 sind Stabilisierungswulste 58 ausgebildet (siehe auch Fig. 4), die die Verdunstungsmatte 14 stabilisieren und an der Innenwand des Heizabschnitts 5 kondensierendes Wasser an der Abwassertasche 18 vorbei in den Speicherabschnitt 7 leiten.

Die Wärmetauschermatte 30 kann kostengünstig aus einer PVC-Weichfolie gefertigt werden. Sie besteht aus zwei Folienbahnen, die miteinander verschweißt werden, so dass in Längserstreckung Kanäle 34 entstehen. Die Matte wird dann zusammengerollt und an den Enden verklebt, so dass ein Rohr entsteht (siehe Fig. 5), welches durch Distanzelemente im Zentrum des Kondensierabschnittes 6 gehalten wird. Da die Wärmetauschermatte 30 kühler als die Umgebung ist, wird eine Kondensierung des Wasserdampfes eingeleitet. Die nun kühlere Luft fällt im Rohr nach unten, wodurch der Kreislauf angetrieben wird. Die bei der Kondensierung freiwerdende Wärmeenergie wird vom Abwasser in der Wärmetauschermatte 30 aufgenommen. Es hat sich gezeigt, dass dadurch eine Energierückgewinnung von bis zu 80% möglich ist. Da sich der Abwasserzulauf 3 am höchsten Punkt des Systems befindet, ist für die Abwasserzufuhr keine Pumpe erforderlich. Die in Fig. 8 dargestellte Ausführungsvariante der erfindungsgemäßen Vorrichtung unterscheidet sich von jener gemäß Fig. 1 durch einen besonders einfachen Solarkollektor 10, dessen Seitenteile 13 kreisrund ausgebildet sind und durch Kleben oder Verschweißen fix am Heizabschnitt 5 des rohrförmigen Fluidkreislaufs 2 befestigt sind. Bei dieser Ausführungsvariante ist eine Nachführeinrichtung 35 zum Ausgleich des Sonnenstandes realisiert, mit welcher eine Kippbewegung der gesamten Vorrichtung 1 ausgelöst wird. Die Nachführeinrichtung greift dazu direkt am Fluidkreislauf 2, beispielsweise am Kondensierabschnitt 6, an, ist konstruktiv sehr einfach gestaltet und besteht im Wesentlichen aus zwei entfaltbaren, aufpumpbaren Formkörper 36a, 36b, die über eine Pumpe 39 verbunden sind. Mit Hilfe der Pumpe 39 wird beispielsweise Wasser von einem Formkörper 36a in den anderen Formkörper 36b umgepumpt, wobei der jeweilige Füllgrad der Formkörper 36a, 36b den Neigungswinkel α der Vorrichtung 1 festlegt. Die Formkörper 36a, 36b können beispielsweise aus mehrfach unterteilten Keilen bestehen. Fig. 10 zeigt beispielsweise eine der Extremstellungen des Kondensierabschnittes 6 (beispielsweise bei tiefem Sonnenstand am Morgen), in welcher der Formkörper 36a fast völlig entleert und der Formkörper 36b maximal aufgepumpt ist.

Die Pumpe 39 zwischen den beiden Formkörpern 36a und 36b wird durch eine Steuereinrichtung betätigt, die einen am Heizabschnitt 5 befestigten Lichtsensor 37 und einen auf der transparenten Eintrittsfolie 12 angeordneten Schattengeber 38 aufweist. Wie in der Darstellungsfolge gemäß Fig. 9 dargelegt, fällt der Schatten 40 des Schattengebers 38 zunächst nicht auf den Sensor 37, so dass die Pumpe eingeschaltet wird und sich die Vorrichtung dem Sonnenstand annähert. Der Schatten 40 wandert und fällt schließlich auf den Lichtsensor 37, wodurch die Pumpe 39 abgeschaltet wird. Sobald die Sonne weiterwandert, wiederholt sich dieser Vorgang bis zum Sonnenuntergang. In der Nacht muss lediglich das Wasser vom Formkörper 36a in den Formkörper 36b umgepumpt werden, um das System wieder in die Ausgangsstellung für den Sonnenaufgang zu bringen.

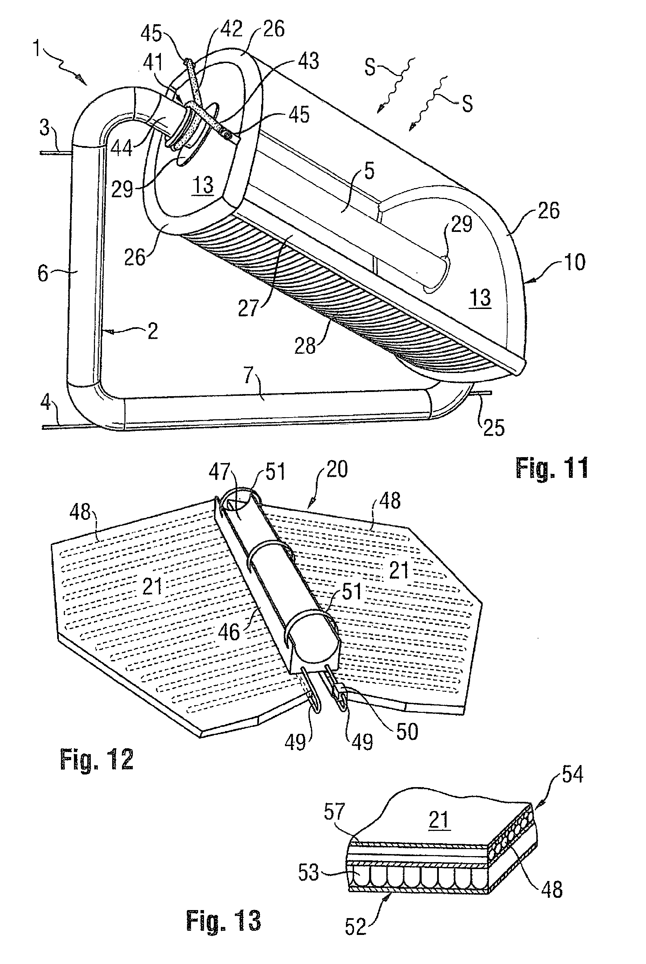

Fig. 11 zeigt eine weitere vorteilhafte Nachführeinrichtung 41 zum Ausgleich des Sonnenstandes, welche eine Drehbewegung des Kollektors 10 um die Achse des Heizabschnittes 5 auslöst. Die Nachführeinrichtung 41 weist dafür erste und zweite Schlauchabschnitte 42, 43 auf, deren Enden einmal nach links und einmal nach recht um einen rohrförmigen Abschnitt 44 des Fluidkreislaufs 2 gewunden sind. Die äußeren, freien Enden 45 der beiden Schlauchabschnitte 42, 43 sind jeweils an der Außenkontur des Solarkollektors 10 befestigt. In gleicher Weise wie beim Nachführsystem gemäß Fig. 8 steuert nun eine Pumpe (nicht dargestellt) den Druck in einer der beiden Schlauchabschnitte 42, 43, wodurch eine Drehbewegung des Kollektors ausgelöst wird. Auch hier können die Schlauchabschnitte 42, 43 aus textilverstärktem Folienmaterial bestehen und mehrere Vorrichtungen gemäß Fig. 11 zu einem Verbund zusammengeschaltet werden.

Bei der erfindungsgemäßen Ausführungsvariante gemäß Fig. 2 weist der Solarkollektor 20 zwei Absorberflügel 21 auf, die mit der Verdunstungsfläche 9 des Heizabschnittes 5 in thermischem Kontakt stehen. Die zwei Absorberflügel 21 können parallel zur Achse des Heizabschnittes 5 drehbar oder faltbar ausgeführt sein und aus einer in Fig. 2 dargestellten Gebrauchsstellung in eine platzsparende Aufbewahrungs- oder Lagerstellung gebracht werden, indem diese in den durch den Fluidkreislauf 2 aufgespannten Raum 22 eingeklappt werden. Der Solarkollektor 20 kann beispielsweise mit Halteelementen 51 (z.B. Haltegurte) am Heizabschnitt 5 des Fluidkreislaufs befestigt werden.

Mehrere vorteilhafte Details des Solarkollektors 20 sind in Fig. 12 dargestellt. Die Absorberflügel 21 sind an einem Basisteil 46 befestigt, das eine an den Heizabschnitt 5 angepasste Aufnahmefläche 47 aufweist. Zur Verbesserung des Wärmeüberganges ist insbesondere bei dieser Ausführungsvariante an der Außenseiten des Heizabschnittes 5 eine wärmeleitende Folie 23, vorzugsweise eine Kupferfolie, angeordnet. Der Wärmeübergang kann zusätzlich durch Aufbringen einer Wärmeleitpaste zwischen der Aufnahmefläche 47 und der Kupferfolie 23 verbessert werden.

Bevorzugt weisen die Absorberflügel 21 Kanäle 48 für den Transport eines Wärmeträgermediums (z.B. Öl oder Wasser) auf, welche Kanäle 48 in Verbindungsleitungen 49 münden, die durch das Basisteil 46 des Solarkollektors 20 geführt sind. In Arbeitsstellung sind die beiden Absorberflügel 21 - wie in Fig. 2 dargestellt - derart geneigt, dass das erhitze Wärmeträgermedium in Richtung Basisteil 46 aufsteigt. Der Wärmetransport kann zusätzlich durch ein Fördermittel 50, beispielsweise eine Solarpumpe, unterstützt werden, die in zumindest einer der beiden Verbindungsleitungen 49 angeordnet ist.

Wie in der Detailzeichnung gemäß Fig. 13 angedeutet, kann der Absorberflügel 21 aus einem mehrlagigen Folienverbund bestehen, wobei eine aufblasbare Stützmatte 52 mit Luftkanälen 53 vorgesehen ist, welche eine Absorbermatte 54 mit den Kanälen 48 für das Wärmeträgermedium trägt. Um die Wärmeverluste zu minimieren, kann an der äußeren Oberfläche der Absorbermatte 54 eine Isolierfolie 57 angebracht sein.

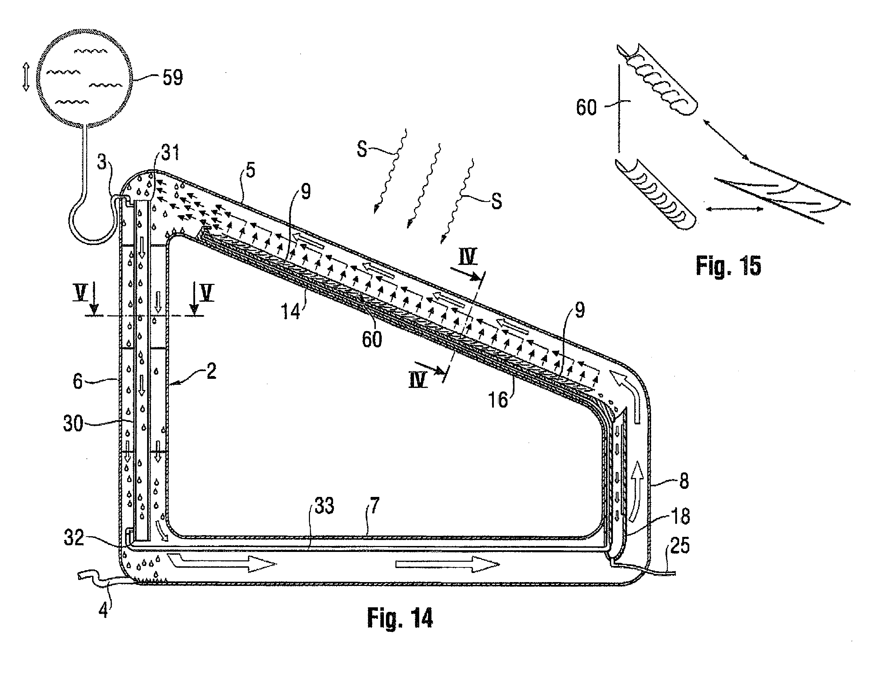

Als weitere Alternative wird in den Fig. 14 und Fig. 15 eine Ausführungsvariante der Erfindung dargestellt, die das Salz- bzw. Abwasser ohne Regelventil 55 und Pumpe 15 der eingangs beschriebenen Variante zum Heizabschnitt 5 führt. Das Abwasser wird in diesem Fall allein durch den hydrostatischen Druck auf Grund des Höhenunterschieds zwischen einem oberhalb des Abwasserzulaufs 3 angeordneten Versorgungsbehälter 59 und der Austrittsstelle des Abwassers am oberen Ende des Heizabschnitts 5 transportiert.

In einer weiteren Variante kann eine Vergrößerung der Verdunstungsfläche 9 dadurch erreicht werden, dass man zwei unterschiedlich gebogene, bzw. mit unterschiedlicher radialer Krümmung ausgestattete Halbrohre 60, beispielsweise aus Metall, dicht übereinander oberhalb der Förderkanäle 17 der Aufheiztasche 16 anbringt bzw. anschweißt. Dabei ist die Fläche des oberen Halbrohrs in regelmäßigen Abständen halbkreisförmig aufgeschnitten und nach unten gebogen, die Fläche des unteren Halbrohrs in regelmäßigen Abständen halbkreisförmig aufgeschnitten und nach oben gebogen, wobei beide Halbrohre so miteinander verzahnt (siehe Fig. 15) sind, dass das erhitzte Wasser nicht direkt, sondern in einem Zickzack-Kurs den Heizabschnitt 5 durchströmt und der nicht verdampfte Rest am Ende der Verdunstungsfläche in die Abwassertasche 18 fließt und von dort direkt durch den Abwasserabfluss 25 abgeführt werden kann.

Weiters können zur besseren Wärmeübertragung die Halbrohre 60 direkt mit der wärmeleitenden Folie 23 des Heizabschnitts 5 verbunden sein. Es ist auch möglich den gesamten unteren Abschnitt des Heizabschnitts zwischen Metall-Halbrohren 60 und wärmeleitender Folie 23 komplett aus Metall herzustellen.

Die Durchflussgeschwindigkeit des Abwassers kann am Abwasserablauf 25 und am Abwasser-(Salzwasser-)Zulauf 3 durch Wasserzähler gemessen und die Durchflussmenge und damit der Prozentsatz des zu verdunstenden Wassers durch Höhenverstellung des Versorgungsbehälters 59 und daher durch Veränderung des hydrostatischen Drucks gesteuert werden.

Als weitere Variante kann die Temperatur im Aufheizbereich des Heizabschnitts 5 durch Veränderung der Krümmung der Spiegelfolie 11 gesteuert werden, wobei in diesem Fall die Folie bevorzugt aus einer verspiegelten oder polierten dünnen Metallplatte (z.B. Aluminium) besteht.

Der Solarkollektor 10 gemäß Fig. 1 kann dahingehend abgeändert werden, dass das aufblasbare Verbindungselement 27 ein starres Rohr wird, und die Rahmenteile 26 als Ringschlauch ausgeführt sind. Diese Teile können ebenfalls aus dem Versorgungsbehälter mit Wasser befüllt werden, wobei der Ringschlauch 26 entweder bis zur kompletten Kreisform (wie z.B. in Fig. 8) mit Wasser vollgepumpt oder durch Ablassen von Wasser und Verringerung der Spannung im Ringschlauch 26 die Spiegelfläche von einer halbkreisförmigen Form in eine immer flachere Form gebracht wird. Die Spiegelregulierung kann durch einen Thermostat (nicht dargestellt) im Aufheizbereich gesteuert werden. Dieser aktiviert bei Absinken der Temperatur unter einen festgelegten unteren Wert bzw. bei Überschreiten eines festgelegten höchsten Temperaturwertes eine Pumpe bzw. ein Ablassventil, um den Innendruck und damit die Krümmung der Spiegelfläche zu regulieren.

## Patentansprüche

1. Portable, solarthermische Vorrichtung (1) zur Herstellung von Frischwasser aus Abwässern oder Salzwasser, mit einem geschlossenen Fluidkreislauf (2) aus miteinander verbundenen Rohr- oder Schlauchelementen mit einem Abwasserzulauf (3) und einem Frischwasserablauf (4),
- wobei der Fluidkreislauf (2) einen geneigten, im Wesentlichen normal zur Sonneneinstrahlung (S) ausgerichteten Heizabschnitt (5) zur Erwärmung und Verdunstung des Abwassers, daran anschließend
- einen im Wesentlichen senkrecht ausgerichteten Kondensierabschnitt (6) zur Kondensation des Frischwassers und Erwärmung des Abwassers, und
- einen als Fussteil ausgebildeten Speicherabschnitt (7) für das kondensierte Frischwasser aufweist,
**dadurch gekennzeichnet, dass**
- der Fluidkreislauf (2) platzsparende flache Struktur aufweist,
- die Rohrelemente zusammensteckbar und die Schlauchelemente aufpumpbar ausgebildet sind, und
- der Heizabschnitt (5) des Fluidkreislaufs (2) einen Solarkollektor (10, 20) zur Konzentration der thermischen Energie der Sonnenstrahlung (S) auf eine Verdunstungsfläche (9) im Inneren des Heizabschnitts (5) aufweist,
- welcher Solarkollektor (10, 20) beweglich am Heizabschnitt (5) befestigt ist.

2. Vorrichtung nach Anspruch 1, **dadurch gekennzeichnet, dass** der Solarkollektor (10) aus einer aufblasbaren Folienstruktur besteht, die eine parabel- oder kreiszylindrische Spiegelfolie (11) und eine transparente Eintrittsfolie (12) für die Sonnenstrahlung (S) aufweist, die gemeinsam mit zwei Seitenteilen (13) einen Hohlraum aufspannen, den der Heizabschnitt (5) des Fluidkreislaufs (2) im Fokusbereich der Spiegelfolie (11) durchsetzt.

3. Vorrichtung nach Anspruch 1, **dadurch gekennzeichnet, dass** der Solarkollektor (20) zumindest einen Absorberflügel (21) aufweist, der mit der Verdunstungsfläche (9) des Heizabschnitts (5) in thermischem Kontakt steht.

4. Vorrichtung nach einem der Ansprüche 1 bis 3, **dadurch gekennzeichnet, dass** im Inneren des Kondensierabschnitts (6) eine vorzugsweise einen Zylindermantel bildende Wärmetauschermatte (30) aus einem flexiblen Folienmaterial angeordnet ist, deren oberer Rand (31) mit dem Abwasserzulauf (3) und deren unterer Rand (32) mit einer durch den Speicherabschnitt (7) des Fluidkreislaufs (2) geführten Schlauchleitung (33) verbunden ist, die das Abwasser über ein Fördermittel (15), vorzugsweise eine Solarpumpe, in den Heizabschnitt (5) führt.

5. Vorrichtung nach einem der Ansprüche 1 bis 4, **dadurch gekennzeichnet, dass** zur Verbesserung des Wärmeübergangs an der Aussenseite des Heizabschnitts (5) eine wärmeleitende Folie (23), vorzugsweise eine Kupferfolie, angeordnet ist.

6. Vorrichtung nach Anspruch 3, **dadurch gekennzeichnet, dass** der Solarkollektor (10) an den Seitenteilen (13) aufblasbare Rahmenteile (26) aus textilverstärktem Folienmaterial aufweist, die im aufgeblasenen Zustand die Parabeloder Kreisform der Spiegelfläche (11) aufspannen.

7. Vorrichtung nach Anspruch 6, **dadurch gekennzeichnet, dass** die aufblasbaren Rahmenteile (26) der Seitenteile (13) über aufblasbare Verbindungselemente (27) aus textilverstärktem Folienmaterial verbunden sind.

8. Vorrichtung nach Anspruch 6 oder 7, **dadurch gekennzeichnet, dass** die Spiegelfolie (11) auf einer vorzugsweise mehrlagigen, aufblasbaren Stützfolie (28) aufgebracht ist.

9. Vorrichtung nach einem der Ansprüche 6 bis 8, **dadurch gekennzeichnet, dass** die Seitenteile (13) des Solarkollektors (10) Lagerscheiben (29) aufweisen, mit welchen der Solarkollektor (10) drehbar am Heizabschnitt (5) des rohrförmigen Fluidkreislaufs (2) gelagert ist.

10. Vorrichtung nach einem der Ansprüche 6 bis 8, **dadurch gekennzeichnet, dass** die Seitenteile (13) des Solarkollektors (10) durch Kleben oder Verschweissen fix am Heizabschnitt (5) des rohrförmigen Fluidkreislaufs (2) befestigt sind.

11. Vorrichtung nach Anspruch 10, **dadurch gekennzeichnet, dass** der Solarkollektor (10) eine Nachführeinrichtung (35) zum Ausgleich des Sonnenstandes aufweist, welche am Fluidkreislauf (2), vorzugsweise am Kondensierabschnitt (6) angreift und eine Kippbewegung der gesamten Vorrichtung (1) auslöst, wobei die Nachführeinrichtung (35) über eine Pumpe (39) verbundene, entfaltbare Formkörper (36a, 36b), beispielsweise mehrfach unterteilte Keile, aufweist, deren jeweiliger Füllgrad den Neigungswinkel der Vorrichtung (1) festlegt.

12. Vorrichtung nach einem der Ansprüche 1 bis 3, **dadurch gekennzeichnet, dass** der Solarkollektor (10) eine Nachführeinrichtung (41) zum Ausgleich des Sonnenstandes aufweist, welche eine Drehbewegung des Kollektors (10) um die Achse des Heizabschnittes (5) auslöst, wobei die Nachführeinrichtung (41) erste und zweite Schlauchabschnitte (42, 43) aufweist, deren Enden jeweils in entgegengesetzten Richtungen um einen rohrförmigen Abschnitt (44) des Fluidkreislaufs (2) gewunden sind und deren freie Enden (45) am Solarkollektor (10) festgelegt sind.

13. Vorrichtung nach einem der Ansprüche 1 bis 5, **dadurch gekennzeichnet, dass** ein mit dem Abwasserzulauf (3) verbundener Versorgungsbehälter (59) vorgesehen ist und der Transport des Abwassers im Wesentlichen nur durch den hydrostatischen Druck auf Grund des Höhenunterschieds zwi-sehen dem Versorgungsbehälter (59) und der Austrittsstelle des Abwassers am oberen Ende des Heizabschnitts (5) erfolgt.

14. Vorrichtung nach Anspruch 1 oder 2, **dadurch gekennzeichnet, dass** die Verdunstungsfläche (9) im Heizabschnitt (5) durch zwei Halbrohre (60) mit unterschiedlicher radialer Krümmung, beispielsweise aus Metall, vergrössert ist, die dicht übereinander oberhalb einer Aufheiztasche (16) der Verdunstungsfläche (9) angebracht sind.

15. Vorrichtung nach Anspruch 14, **dadurch gekennzeichnet, dass** die Halbrohre (60) direkt mit einer wärmeleitenden Folie (23) des Heizabschnitts (5) verbunden sind.

## Claims

1. Portable, solar-thermal device (1) for production of fresh water from sewage water or salt water having a closed fluid circuit (2) made of pipe or hose elements connected to a sewage water supply (3) and a fresh water runoff (4),
- with the fluid circuit (2) having a tilted heating section (5) aligned mainly normally to the sun irradiation (S) for heating and vaporisation of the sewage water, followed by
- a mainly vertically aligned condensation section (6) for condensation of the fresh water and heating of the sewage water, and
- a storage section (7) formed as base area for the condensed fresh water,
**characterised in that**
- the fluid circuit (2) has a space-saving flat structure,
- the pipe elements are designed to be stuck together and the hose elements are designed inflatable, and
- the heating section (5) of the fluid circuit (2) has a solar collector (10, 20) for focussing the thermal energy of sun irradiation (S) on a vaporisation area (9) inside the heating section (5),
- with the solar collector (10, 20) being attached movably to the heating section (5).

2. Device according to claim 1, **characterised in that** the solar collector (10) consists of an inflatable foil structure having a parabolic or circular cylindrical reflective foil (11) and a transparent entry foil (12) for sun irradiation (S) that together with two side elements (13) span a hollow space penetrated by the heating section (5) of the fluid circuit (2) in the focal area of the reflective foil (11).

3. Device according to claim 1, **characterised in that** the solar collector (20) has at least one absorber wing (21) in thermal contact to the vaporisation area (9) of the heating section (5).

4. Device according to one of the claims 1 to 3, **characterised in that** inside the condensation section (6) there is a heat exchanger mat (30) made of flexible foil material preferably forming a cylinder coating, the upper edge (31) of which is connected to the sewage water supply (3) and the lower edge (32) of which is connected to a hose line (33) led through the storage section (7) of the fluid circuit (2), which transports the sewage water through transportation means (15), preferably a solar pump, into the heating section (5).

5. Device according to one of the claims 1 to 4, **characterised in that** for improvement of the heat transfer at the outside of the heating section (5) there is a heat-conductive foil (23), preferably copper foil.

6. Device according to claim 3, **characterised in that** the solar collector (10) has inflatable frame parts (26) made of textile-reinforced foil material at the side elements (13) which open the parabolic or circular shape of the reflective surface (11) in the inflated state.

7. Device according to claim 6, **characterised in that** the inflatable frame parts (26) of the side elements (13) are connected by inflatable connection elements (27) of textile-reinforced foil material.

8. Device according to claim 6 or 7, **characterised in that** the reflective foil (11) is attached to a preferably multi-layer inflatable support foil (28).

9. Device according to one of the claims 6 to 8, **characterised in that** the side elements (13) of the solar collector (10) have bearing discs (29) via which the solar collector (10) is attached rotatably to the heating section (5) of the pipe-shaped fluid circuit (2).

10. Device according to one of the claims 6 to 8, **characterised in that** the side elements (13) of the solar collector (10) are attached firmly to the heating section (5) of the pipe-shaped fluid circuit (2) by gluing or welding.

11. Device according to claim 10, **characterised in that** the solar collector (10) has an adjustment device (35) for adjusting to sun position, which acts on the fluid circuit (2), preferably the condensation section (6), and triggers a tilting movement of the complete device (1), wherein the adjustment device (35) has form elements (36a, 36b) that can be folded open and are connected via a pump (39), for example multiply separated wedges, the respective fill level of which determines the inclination level of the device (1).

12. Device according to one of the claims 1 to 3, **characterised in that** the solar collector (10) has an adjustment device (41) for adjusting to sun position which triggers a rotating movement of the collector (10) around the heating section (5) axis, wherein the adjustment device (41) has first and second hose sections (42, 43) the ends of which are wound around a pipe-shaped section (44) of the fluid circuit (2) in opposite directions and the free ends of which (45) are attached to the solar collector (10).

13. Device according to one of the claims 1 to 5, **characterised in that** a supply container (59) connected to the sewage water supply (3) is provided and that the transport of sewage water is essentially only performed by the hydrostatic pressure due to the height difference between the supply container (59) and the exit site of the sewage water at the upper end of the heating section (5).

14. Device according to claim 1 or 2, **characterised in that** the vaporisation area (9) in the heating section (5) is enlarged by two half pipes (60) with different radial bend, for example made of metal, which are placed close above each other above a heating pocket (16) of the vaporisation area (9).

15. Device according to claim 14, **characterised in that** the half pipes (60) are directly connected to a heat-conducting foil (23) of the heating section (5).

## Revendications

1. Dispositif thermo-solaire portable (1) pour la production d'eau douce à partir d'eaux usées ou d'eau salée, comprenant un circuit de fluide (2) fermé constitué d'éléments en forme de tube ou de tuyau flexible reliés les uns aux autres et comprenant une arrivée pour eaux usées (3) et une évacuation pour eau douce (4),
- dans lequel le circuit de fluide (2) présente une section de chauffage (5) orientée essentiellement de manière normale par rapport au rayonnement solaire (S) pour réchauffer et évaporer les eaux usées,
- une section de condensation (6) adjacente à ladite section de chauffage, orientée essentiellement de manière perpendiculaire, pour la condensation de l'eau douce et pour réchauffer les eaux usées, et
- une section de stockage (7) réalisée sous la forme d'un piètement, destinée à l'eau douce condensée,
**caractérisé en ce que**
- le circuit de fluide (2) présente une structure plate peu encombrante,
- les éléments sous forme de tube peuvent être emboîtés et les éléments sous forme de tuyau flexible sont réalisés de manière à pouvoir être gonflés, et
- la section de chauffage (5) du circuit de fluide (2) présente un collecteur solaire (10, 20) pour concentrer l'énergie thermique du rayonnement solaire (S) sur une face d'évaporation (9) à l'intérieur de la section de chauffage (5),
- ledit collecteur solaire (10, 20) étant fixé de manière mobile à la section de chauffage (5).

2. Dispositif selon la revendication 1, **caractérisé en ce que** le collecteur solaire (10) est constitué d'une structure de film gonflable, qui présente un film miroir (11) parabolique ou cylindrique circulaire et un film d'entrée (12) transparent pour le rayonnement solaire (S), lesquels recouvrent conjointement par deux parties latérales (13), une cavité que la section de chauffage (5) du circuit de fluide (2) dans la zone focale du film miroir (11) traverse.

3. Dispositif selon la revendication 1, **caractérisé en ce que** le collecteur solaire (20) présente au moins une aile d'absorbeur (21), qui est en contact thermique avec la face d'évaporation (9) de la section de chauffage (5).

4. Dispositif selon l'une quelconque des revendications 1 à 3, **caractérisé en ce qu'**est disposée, à l'intérieur de la section de condensation (6), une plaque d'échangeur thermique (30), formant de préférence une enveloppe cylindrique, constituée d'un matériau pelliculaire flexible, dont le bord supérieur (31) est relié à l'arrivée pour eaux usées (3) et dont le bord inférieur (32) est relié à une conduite flexible (33) guidée à travers la section de stockage (7) du circuit de fluide (2), ladite conduite flexible acheminant les eaux usées dans la section de chauffage (5) par l'intermédiaire d'un moyen d'acheminement (15), de préférence par l'intermédiaire d'une pompe solaire.

5. Dispositif selon l'une quelconque des revendications 1 à 4, **caractérisé en ce qu'**un film thermoconducteur (23), de préférence un film en cuivre, est disposé au niveau du côté extérieur de la section de chauffage (5) pour améliorer le transfert de chaleur.

6. Dispositif selon la revendication 3, **caractérisé en ce que** le collecteur solaire (10) présente au niveau des parties latérales (13) des parties cadre (26) gonflables constituées d'un matériau pelliculaire renforcé par du textile, lesquelles parties cadre recouvrent, à l'état gonflé, la face miroir (11) de forme parabolique ou circulaire.

7. Dispositif selon la revendication 6, **caractérisé en ce que** les parties cadre (26) gonflables des parties latérales (13) sont reliées par l'intermédiaire d'éléments d'assemblage (27) gonflables constitués d'un matériau pelliculaire renforcé par du textile.

8. Dispositif selon la revendication 6 ou 7, **caractérisé en ce que** le film miroir (11) est appliqué sur un film d'appui (28) gonflable, de préférence multicouche.

9. Dispositif selon l'une quelconque des revendications 6 à 8, **caractérisé en ce que** les parties latérales (13) du collecteur solaire (10) présentent des rondelles de logement (29), au moyen desquelles le collecteur solaire (10) est logé de manière à pouvoir tourner par rapport à la section de chauffage (5) du circuit de fluide (2) de forme tubulaire.

10. Dispositif selon l'une quelconque des revendications 6 à 8, **caractérisé en ce que** les parties latérales (13) du collecteur solaire (10) sont fixées par collage ou par soudage de manière fixe à la section de chauffage (5) du circuit de fluide (2) de forme tubulaire.

11. Dispositif selon la revendication 10, **caractérisé en ce que** le collecteur solaire (10) présente un suiveur (35) pour compenser la position du soleil, lequel vient en prise avec le circuit de fluide (2), de préférence avec la section de condensation (6) et déclenche un mouvement de basculement de l'ensemble du dispositif (1), dans lequel le suiveur (35) présente des éléments moulés (36a, 36b) pouvant être déployés, reliés par l'intermédiaire d'une pompe (39), par exemple des onglets à plusieurs divisions, dont le niveau de remplissage respectif détermine l'angle d'inclinaison du dispositif (1).

12. Dispositif selon l'une quelconque des revendications 1 à 3, **caractérisé en ce que** le collecteur solaire (10) présente un suiveur (41) pour compenser la position du soleil, lequel déclenche un mouvement de rotation du collecteur (10) autour de l'axe de la section de chauffage (5), dans lequel le suiveur (41) présente des premières et des deuxièmes sections de tuyau flexible (42, 43) dont les extrémités sont enroulées respectivement dans des directions opposées autour d'une section (44) de forme tubulaire du circuit de fluide (2) et dont les extrémités libres (45) sont fixées au collecteur solaire (10).

13. Dispositif selon l'une quelconque des revendications 1 à 5, **caractérisé en ce qu'**un réservoir d'alimentation (59) relié à l'arrivée pour eaux usées (3) est prévu, et **en ce que** le transport des eaux usées est effectué essentiellement uniquement par la pression hydrostatique liée à la différence de hauteur entre le réservoir d'alimentation (59) et le point de sortie des eaux usées à l'extrémité supérieure de la section de chauffage (5).

14. Dispositif selon la revendication 1 ou 2, **caractérisé en ce que** la face d'évaporation (9) dans la section de chauffage (5) est agrandie par deux demitubes (60) présentant une courbure radiale différente, par exemple en métal, lesquels sont placés les uns sur les autres de manière étanche, au-dessus d'une poche de chauffage (16) de la face d'évaporation (9).

15. Dispositif selon la revendication 14, **caractérisé en ce que** les demi-tuyaux (60) sont reliés directement à un film (23) thermoconducteur de la section de chauffage (5).
